Europäisches Patentamt

European Patent Office

Office européen des brevets

(19)

(11) Veröffentlichungsnummer: **0 187 184**
**B1**

(12) **EUROPÄISCHE PATENTSCHRIFT**

(45) Veröffentlichungstag der Patentschrift: **05.12.90**

(51) Int. Cl.⁵: **G 02 C 5/16**

(21) Anmeldenummer: **85104772.0**

(22) Anmeldetag: **19.04.85**

(54) Bügelendstück für einen Bügel einer Brillenfassung.

(30) Priorität: **18.12.84 DE 3446184**

(43) Veröffentlichungstag der Anmeldung:
**16.07.86 Patentblatt 86/29**

(45) Bekanntmachung des Hinweises auf die
Patenterteilung:
**05.12.90 Patentblatt 90/49**

(84) Benannte Vertragsstaaten:
**AT BE CH DE FR GB IT LI LU NL SE**

(56) Entgegenhaltungen:
**EP-A-0 170 721**
**DE-C- 662 038**
**GB-A- 261 315**
**US-A-4 389 102**

(73) Patentinhaber: **EYEMETRICS-SYSTEMS AG**
**Steinbockstrasse 4**
**CH-7001 Chur (CH)**

(72) Erfinder: **Anger, Wilhelm**
**Chesa Pas-chüra**
**CH-7500 St. Moritz Suvretta (CH)**
Erfinder: **Wiedmann, Helmut**
**Hundsbergstrasse 29**
**D-7100 Heilbronn (DE)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

EP 0 187 184 B1

**Beschreibung**

Die Erfindung bezieht sich auf ein Bügelendstück für einen Bügel einer Brillenfassung gemäß dem Oberbegriff von Patentanspruch 1.

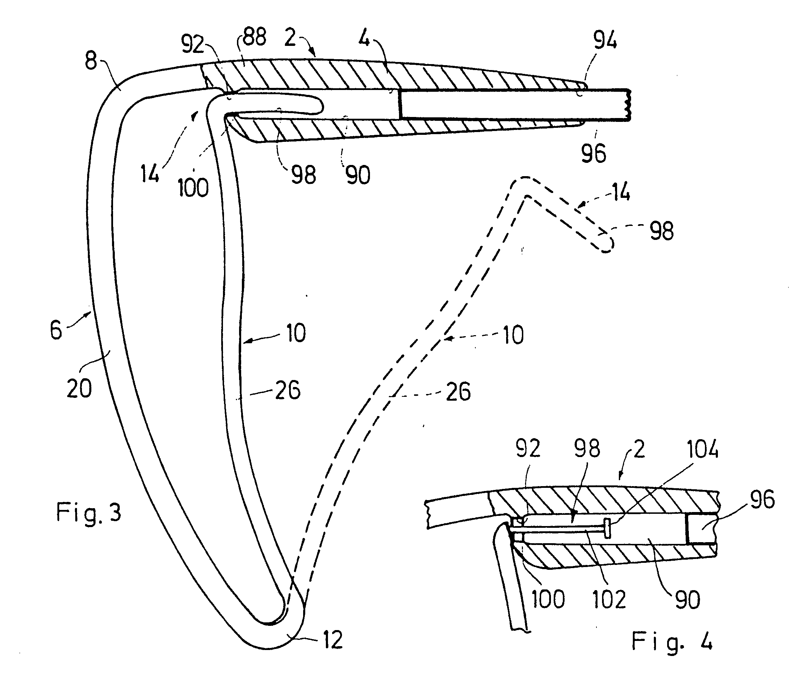

Ein solches Bügelendstück ist bekannt (DE-PS 662 038). Bei diesem bekannten Bügelendstück geht der übrige Bügel gerade in den ersten Abschnitt über. Der Anlageabschnitt umgreift das Ohr bogenförmig von hinten. Der Verbindungsabschnitt ist als schlaufenförmige Feder ausgebildet, deren Krümmungsinnenseite zum Ohr weist. Die schlaufenförmige Feder geht an ihrem oberen Ende unmittelbar in den ersten Abschnitt über. An ihrem unteren Ende ist sie mit dem Anlageabschnitt verbunden, und zwar geht sie dort unmittelbar in den metallischen Kern desselben über. Ein kurzes Stück der Kunststoffumhüllung des Anlageabschnitts steht mit ihrem freien Ende in Richtung zum ersten Abschnitt vor (Abb. 3). Bei einer heftigen Kopfbewegung und einer dadurch verursachten Verlagerung der Brille am Kopf verformt sich der Verbindungsabschnitt, so daß eine Rückstellkraft auftritt, die die Brille wieder in ihre Ausgangslage zurückbringen soll. Günstig bei diesem bekannten Bügelendstück ist, daß die Gefahr des Einschneidens bzw. der erhöhten Durckbeanspruchung hinter dem Ohr verringert ist und gleichzeitig für eine gewisse federnde Nachgiebigkeit gesorgt ist, aufgrund derer die Brille federnd und somit sicherer am Kopf gehalten wird. Bei diesem bekannten Bügelendstück wirkt jedoch dann, wenn der federnde Verbindungsabschnitt verformt worden ist, die Rückstellkraft am Bügelendstück nach schräg hinten und oben, so daß der Rückziehbewegung der Brillenfassung eine Bewegung überlagert ist, bei der die ersten Abschnitte der Bügelendstücke nach oben gedrückt werden, so daß es häufig notwendig ist, den Sitz der Brille zu korrigieren.

Aufgrund der älteren europäischen Anmeldung 84 112 947.1 (=EP—0 170 721) gehört ein Bügelendstück zum Stand der Technik nach Art. 54(3) EPÜ, bei dem der Anlageabschnitt in seinem Mittelbereich oder unterhalb desselben am übrigen Bügelendstück und somit am Bügel abgestützt ist. Zumindest die obere Hälfte der Gesamtlänge des Anlageabschnitts steht frei nach oben vor. Diese Geometrie des Bügelendstücks führt dazu, daß der Anlageabschnitt von schräg unten und hinten gehalten ist und von ihm gegebenenfalls auch nach schräg oben und vorn gerichtete Kräfte ausgeübt werden können und daß sich bei einer durch innere Elastizität des Werkstoffs des Bügelendstücks oder durch gezielt im Bügelstück vorgesehene Federelemente ermöglichte und durch auf den Anlageabschnitt ausgeübte, nach hinten gerichtete Kräfte verursachte Auslenkbewegungen des Anlageabschnitts das obere, freie Ende des Anlageabschnitts am stärksten (im Vergleich zu den übrigen Bereichen des Anlageabschnitts) oder doch zumindest stark verlagert. Dies bedeutet, daß die durch die Auslenkung bewirkte Rückstellkraft, die vom Anlageabschnitt ausgeübt wird bzw. als Reaktionskraft auf diesen wirkt, unter einem um so günstigeren Winkel angreift, je stärker die Auslenkung ist. Der Winkel ist um so günstiger, je geringer die senkrecht nach oben gerichtete, auf das Bügelendstück wirkende Reaktionskraftkomponente ist.

Das durch diese Ausbildung hervorgerufene Verhalten des Bügelendstücks im Falle einer elastischen Verformung führt somit dazu, daß die Brillenfassung bzw. die Brille, zu der solche Bügelendstücke gehören, im Falle einer Verlagerung der Brille von den Bügelendstücken nach hinten zurückgezogen wird, ohne daß dieser Rückziehbewegung ein nennenswertes Hochschieben der Bügelendstücke überlagert ist.

Die Brille kehrt daher leichter in ihre Ausgangslage zurück, so daß der Brillenträger die Brillenlage seltener zu korrigieren braucht. Erreicht ist dies durch die besondere Art der Abstützung des Anlageabschnitts am übrigen Bügelendstück, wobei der Anlageabschnitt so massiv und steif ausgebildet sein kann, daß er nicht — wie beispielsweise ein Gespinstbügel — hinter dem Ohr mühsam eingefädelt zu werden braucht. Der Anlageabschnitt des Bügelendstücks kann dabei so ausgelegt sein, daß er entweder am Kopf oder hinter dem Ohr oder gleichzeitig am Kopf und hinter dem Ohr anliegt. Vorzugsweise liegt er jedoch im wesentlichen von hinten an der Ohrmuschel an, und zwar im Bereich der Mulde bzw. Rille zwischen der Ohrmuschel und dem Schädel. Wesentlich für das bekannte Bügelendstück ist, daß der Anlageabschnitt so gehalten und geführt ist, daß dann, wenn es zu einer Auslenkung des Anlageabschnitts kommt, die Auslenkbewegung nicht zu einer Verschlechterung des Kraftangriffs des Anlageabschnitts am Kopf und/oder Ohr führt. Dem sind die Geometrie der Elemente des Bügelendstücks und die Verteilung der Federeigenschaften auf die Elemente des Bügelendstücks angepaßt. Diese Halterung und Führung des Anlageabschnitts ermöglicht es zugleich, daß der Anlageabschnitt sich bei aufgesetzter Brille leicht in die richtige Position ausrichtet und dadurch Druckkonzentrationen vorgebeugt ist. Hierzu gehört auch, daß zur Auslenkung des oberen Endes des Anlageabschnitts um einen bestimmten Betrag die geringste Kraft erforderlich ist, was dazu führt, daß gerade derjenige Bereich des Anlageabschnitts, der gegebenenfalls den vom zugeordneten Bügel abzustützenden Brillengewichtsanteil aufnehmen muß, große bzw. die größte Nachgiebigkeit hat und sich somit leicht in eine optimale Stellung einstellen kann.

Obwohl somit dieses zum stand der Technik gehörende Bügelendstück bereits sehr günstige Eigenschaften aufweist, haben sich doch auch Nachteile gezeigt, und zwar beim Aufsetzen und Abnehmen der Brille. Sowohl das Anordnen der Bügelendstücke hinter den Ohren beim Aufsetzen der Brille als auch das Hervorziehen der Bügelendstück aus dem Bereich hinter den Ohren beim Abnehmen der Brille erfordert etwas mehr Aufmerksamkeit und Bemühen von seiten des Brillenträgers, als dies beispielsweise bei einer Brille mit sogenannten Golfbügeln der Fall ist.

Der Erfindung liegt die Aufgabe zugrunde, das gattungsgemäße Bügelendstück derart auszubilden, daß es die damit versehene Brille nicht nur bequem hält und im Falle einer Verlagerung zuverlässig in ihre Ausgangslage zurückbringt, sondern auch beim Aufsetzen der Brille bequemer hinter dem Ohr angeordnet und beim Abnehmen der Brille auf einfachere Weise aus dem Bereich hinter dem Ohr entfernt werden kann.

Diese Aufgabe wird erfindungsgemäß durch die Merkmale im kennzeichnenden Teil von Patentanspruch 1 gelöst.

Bie dem erfindungsgemäßen Bügelendstück ist auber einer Abstützung des Anlageabschnitts im Bereich der unteren Hälfte seiner Gesamtlänge und entsprechendem Auslenkverhalten vorgesehen, daß der erste Abschnitt das obere Ende des Anlageabschnitts aufgrund der Umschließung des oberen Endes durch den ersten Abschnitt in gewissem Umfang führt, ohne jedoch die Auslenkbewegung des Anlageabschnitts zu verhindern. Der Anlageabschnitt kann somit die vorstehend ausführlich erläuterte günstige Auslenkbewegung ausführen, bei der der Kraftangriff des Anlageabschnitts am Kopf und/oder dem Ohr zumindest nicht verschlechtert wird; zugleich jedoch stützt der erste Abschnitt das obere Ende des Anlageabschnitts quer zur Auslenkrichtung, so daß sich der Anlageabschnitt während des Aufsetzens und Abnehmens der Brille in dieser Querrichtung relativ zum ersten Abschnitt nicht wesentlich verlagern kann und vom ersten Abschnitt mitgenommen bzw. geführt wird. Dies erleichtert das Aufsetzen und Abnehmen der Brille.

Eine weitere günstige Eigenschaft, die sich aus der erfindungsgemäßen Ausbildung des Bügelendstücks ergibt, besteht darin, daß aufgrund des Eingriffs zwischen dem oberen Ende des Anlageabschnitts und dem ersten Abschnitt die Umgrenzung des vom ersten Abschnitt, dem Verbindungsabschnitt und dem Anlageabschnitt begrenzten Bereichs geschlossen ist. Dies hat den praktischen Vorteil, daß zwischen dem oberen Ende des Anlageabschnitts und dem ersten Abschnitt hindurch keine Gegenstände, insbesondere keine Haare, in den umgrenzten Bereich gelangen können, die sich am Übergangsbereich zwischen dem Verbindungsabschnitt und dem Anlageabschnitt verfangen könnten und dadurch insbesondere das Abnehmen der Brille behindern würden.

Die mechanisch tragende Verbindung zwischen dem Anlageabschnitt und dem übrigen Bügelendstück is beim erfindungsgemäßen Bügelendstück von einem Übergangsbereich zwischen dem Verbindungsabschnitt und dem Anlageabschnitt gebildet. Die wesentliche Auslenkbewegung des Anlageabschnitts, d.h. die in Richtung nach hinten zum Verbindungsabschnitt erfolgende Auslenkbewegung, ist hinsichtlich der dabei auftretenden elastischen Kräfte sowie der vom Anlageabschnitt jeweils unter Belastung eingenommenen Stellungen im wesentlichen bestimmt durch die Abstützung des Anlageabschnitts im Übergangsbereich und die elastischen Eigenschaften von Verbindungsabschnitt und Anlageabschnitt. Dieses Auslenkverhalten soll durch den Eingriff zwischen dem oberen Ende des Anlageabschnitts und dem ersten Abschnitt, der beim erfindungsgemäßen Bügelendstück vorgesehen ist, möglichst wenig beeinflußt sein. Vorzugsweise ist die Umschließung durch den ersten Abschnitt daher derart, daß hinreichendes mechanisches Spiel zwischen dem oberen Ende des Anlageabschnitts bzw. dessen Verlängerung und dem ersten Abschnitt besteht.

Das erfindungsgemäße Bügelendstück kann sowohl als getrenntes Bauteil gefertigt werden und nach seiner Fertigung mit dem übrigen Bügel verbunden werden, als auch zugleich mit dem übrigen Bügel gefertigt sein, wobei dann der übrige Bügel unmittelbar in den ersten Abschnitt des Bügelendstücks übergeht bzw. der erste Abschnitt des Bügelendstücks das hintere Endstück des Bügelschaftes ist.

Weitere Vorteile der Erfindung ergeben sich aus den Unteransprüchen sowie der folgenden Beschreibung von Ausführungsbeispielen unter Bezugnahme auf die Zeichnungen. Es zeigen:

Figur 1 eine Seitenansicht einer ersten Ausführungsform eines Bügelendstücks;

Figur 2 eine Schnittdarstellung gemäß A—B in Figur 1;

Figur 3 eine Figur 1 entsprechende Darstellung eines zweiten Ausführungsbeispiels;

Figur 4 eine ausschnittsweise Darstellung einer Abwandlung der zweiten Ausführungsform gemäß Figur 3;

Figur 5 eine Figur 1 entsprechende Darstellung eines dritten Ausführungsbeispiels; und

Figur 6 eine Schnittdarstellung gemäß C—D in Figur 5.

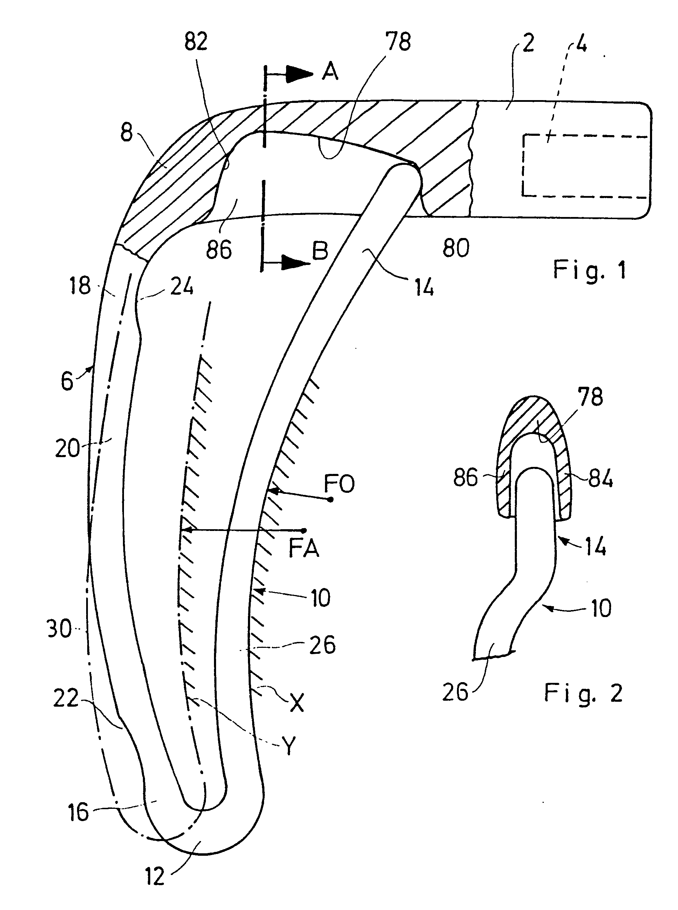

Im folgenden wird zunächst das erste Ausführungsbeispiel unter Bezugnahme auf die Figuren 1 und 2 erläutert.

Das dargestellte Bügelendstück weist einen geraden, länglichen ersten Abschnitt 2 auf, der entweder einstückig mit einem nicht dargestellten Bügelschaft ausgebildet sein kann oder — wie im dargestellten Fall — mit dem Ende des nicht dargestellten Bügelschaftes verbindbar ist, wozu der erste Abschnitt eine Einsecköffnung 4 aufweist. Der erste Abschnitt 2 hat ein abgerundet rechtwinkliges Profil.

Am hinteren, in Figur 1 linken Ende des ersten Abschnitts 2 ist dieser mit dem oberen Ende eines Verbindungsabschnitts 6 verbunden. Der erste Abschnitt 2 und der Verbindungsabschnitt 6 sind einstückig miteinander ausgebildet; die miteinander verbundenen Enden bilden einen ersten Übergangsbereich 8. Der erste Übergangsbereich 8 ist bogenförmig gekrümmt und führt vom im wesentlichen horizontal verlaufenden ersten Abschnitt 2 allmählich über in den im wesentlichen senkrecht verlaufenden Verbindungsabschnitt 6, der seinerseits bogenförmig gekrümmt ist, wobei die Innenseite der Krümmung nach rechts in Figur 1 gewandt ist. Bei aufgesetzter Brille ist somit diese Krümmungsinnenseite dem Ohr zugewandt.

An seinem unteren Ende ist der Verbindungsabschnitt 6 mit dem unteren Ende eines Anlageabschnitts 10 verbunden. Diese beiden Enden bilden einen zweiten Übergangsbereich 12. Auch der Verbindungsabschnitt 6 und der Anlageabschnitt 10 sind einstückig miteinander ausgebildet. Der Übergangsbereich 12 ist bogenförmig gekrümmt und führt allmählich über vom schwächer gekrümmten Verbindungsabschnitt zum im wesentlichen senkrecht bezüglich des ersten Abschnitts 2 verlaufenden Anlageabschnitt 10.

Der Anlageabschnitt 10 ist bogenförmig gekrümmt, wie in Figur 1 erkennbar ist, wobei die Innenseite der Krümmung nach vorne zum Ohr, d.h. nach rechts in Figur 1 gewandt ist. Der Anlageabschnitt 10 ist dazu bestimmt, am Kopf und/oder hinter dem Ohr zur Anlage zu kommen und dadurch das hintere Bügelende abzustützen. Diese Abstützung des hinteren Bügelendes dient dazu, einen Teil der Gewichtskraft der Brille in den Kopf einzuleiten und außerdem die Brille gegen eine Verlagerung nach vorne und ein Herabrutschen auf dem Nasenrücken zu sichern. Vorzugsweise liegt der Anlageabschnitt 10 von hinten an der Ohrmuschel an, und zwar im Bereich der Mulde bzw. Rille zwischen dem Schädel und der Ohrmuschel. Der Anlageabschnitt 10 ist nicht nur in der Zeichenebene von Figur 1, sondern zusätzlich senkrecht dazu gekrümmt (s. Fig. 2), wobei durch diese zusätzliche Krümmung der Anlageabschnitt in seinem Verlauf anatomisch der Form der Ohrmuschel und der Mulde am Übergang zwischen der Ohrmuschel und dem Schädel angepaßt sein kann, um auf diese Weise die Kontaktfläche möglichst groß und dadurch bei gegebener Kraft die auftretenden Drücke möglichst klein zu machen.

Der Anlageabschnitt 10 ist annähernd so lang wie der Verbindungsabschnitt 6 und hat beim dargestellten Ausführungsbeispiel ein (nicht dargestelltes) Kreisprofil mit konstanter Querschnittsfläche über die gesamte Länge des Anlageabschnitts 10. Dabei sind die Stärke bzw. Dicke des Anlageabschnitts 10 und die Werkstoffeigenschaften derart aufeinander abgestimmt, daß der Anlageabschnitt 10 ein federndes Element nach Art einer Blattfeder ist.

Der Verbindungsabschnitt 6 weist nahe seinem unteren Ende einen Federbereich 16 auf. Ferner weist der Verbindungsabschnitt 6 nahe seinem oberen Ende einen weiteren, oberen Federbereich 18 auf. Das (nicht dargestellte) Querschnittsprofil des Verbindungsabschnitts 6 ist kreisförmig oder oval und hat über die gesamte Länge des Verbindungsabschnitts 6 annähernd die gleiche Fläche, wobei sich jedoch der Verbindungsabschnitt 6 von seinem oberen Ende ausgehend zunächst etwas verjüngt. Gleiche Querschnittsfläche wie der Mittelbereich 20 des Verbindungsabschnitts 6 haben auch nicht die Federbereiche 16 und 18. Bei den Federbereichen befindet sich jeweils eine Ausnehmung 22 bzw. 24, durch die die Querschnittsflächen des Verbindungsabschnitts 6 in den Federbereichen 16 und 18 im Vergleich zum Mittelbereich 20 und dem übrigen Bereich des Verbindungsabschnitts 6 verringert ist. Die beiden Federbereiche 16 und 18, in denen der Verbindungsabschnitt 6 somit geschwächt ist, wirken nach Art eines Federgelenks, d.h. eines Gelenks, bei dem einer Auslenkung aus der Normalstellung Federkräfte entgegenwirken. Im übrigen sind bei dem Verbindungsabschnitt 6 die Abmessungen und die Werkstoffeigenschaften derart aufeinander abgestimmt, daß der Verbindungsabschnitt ein nach Art einer Blatt- oder Drahtfeder federndes Element ist, wobei diese Blattfeder steifer ist als die durch den Anlageabschnitt 10 gebildete Blattfeder.

Der erste Übergangsbereich 8 ist etwas abgeflacht, wobei die Abflachung im wesentlichen in der durch den ersten Abschnitt 2 und den Verbindungsabschnitt 6 gebildeten Ebene liegt. Der erste Übergangsbereich 8 verbindet den ersten Abschnitt 2 und den Verbindungsabschnitt 6 verhältnismäßig steif.

An den Mittelbereich 26 des Anlageabschnitts 10 schließt sich dessen oberes Ende 14 an, das in gerader Verlängerung des Mittelbereichs 26 ausgebildet ist und gleiches Querschnittsprofil wie der Mittelbereich 26 hat. In Figur 1 ist das obere Ende 14 halbkugelförmig abgerundet. Im ersten Abschnitt 2 ist eine nach unten offene Längsnut 78 ausgebildet, in die das obere Ende 14 des Anlageabschnitts 10 hineinragt, wie dies in den Figuren 1 und 2 gezeigt ist. Die Längsnut 78 ist derart ausgebildet, daß sie die im wesentlichen in der Zeichenebene von Figur 1 nach links erfolgende Auslenkbewegung des Anlageabschnitts 10 trotz des in die Längsnut 78 hineinragenden Endes 14 nicht behindert. Wie insbesondere Figur 2 erkennen läßt, umschließt die Längsnut 78 das obere Ende 14 seitlich mit Spiel. Am vorderen, in Figur 1 rechten Ende der Längsnut 78 geht der Boden der Längsnut 78 in einen Anschlag 80 über, an dem das obere Ende 14 anliegt, wenn der Anlageabschnitt 10 nicht ausgelenkt ist; dieser Zustand ist in Figur 1 gezeigt. Am hinteren, in Figur 1 linken Ende geht der Boden der Längsnut 78 in einen zweiten Anschlag 82 über, der die Auslenkbewegung des Anlageabschnitts 10 nach links in Figur 1 begrenzt. Dadurch schützt er den Anlageabschnitt 10 vor zu starker Auslenkung und somit vor Beschädigung oder plastischer Verformung. Am vorderen Anschlag 80 liegt das obere Ende 14 in der in Figur 1 gezeigten Stellung mit einer gewissen Vorspannung an. Dies ermöglicht es, den Anlageabschnitt 10 und gegebenenfalls den Verbindungsabschnitt 6 als weiche Federn (niedrige Federkonstante) auszubilden und zugleich zu gewährleisten, daß vom Anlageabschnitt die erforderlichen Reaktionskräfte aufgenommen werden können. Geführt und gesichert ist das obere Ende 14 von den beiden Seitenwänden 84 und 86 der Längsnut 78, die für eine solche Tiefe der Längsnut 78 sorgen, daß das obere Ende 14 des Anlageabschnitts 10 nicht durch Querkräfte (senkrecht zur Zeichenebene von Figur 1) aus der Längsnut 78 herausgedrückt werden kann, sofern diese Querkräfte sich im Rahmen der bei normaler Benutzung der Brille auftretenden Größenordnung halten.

In Figur 2 ist angedeutet, daß das obere Ende 14 des Anlageabschnitts 10 relativ zu dessen Mittelbereich 26 seitlich abgekröpft ist, so daß der Anlageabschnitt 10 in vorstehend schon angedeuteter Weise der Ohrmuschelform bzw. dem Verlauf der Rille zwischen Ohr und Schädel auch in Querrichtung des Kopfes angepaßt sein kann.

Wie sich aus der vorstehenden ausführlichen Beschreibung ergibt und in den Figuren erkennbar ist, ist beim ersten Ausführungsbeispiel der Anlageabschnit 10 lediglich an seinem unteren Ende gehalten und abgestützt. Der gesamte übrige Anlageabschnitt 10, d.h. sowohl dessen obere als auch dessen untere Hälfte bzw. auch schon sein Mittelbereich 26 stehen frei nach oben vor, wobei das obere Ende 14 des Anlageabschnitts 10 vom ersten Abschnitt 2 überdeckt bzw. umschlossen ist.

Aufgrund der vorstehend beschriebenen Ausbildung hat das Bügelendstück Federeigenschaften und ein bestimmtes Auslenkverhalten bei Belastung. Das Bügelendstück ist in Figur 1 mit ausgezogenen Linien im unbelasteten Zustand dargestellt. Zugleich kann diese Darstellung als Darstellung des Bügelendstücks einer aufgesetzten Brille genommen werden, dessen Anlageabschnitt 10 allerdings un Fugur etwas weiter nach inks geschwenkt wäre und durch die normale Belastung bei aufgesetzter Brille in die mit ausgezogene Linien in Figur 1 dargestellte Stellung gebracht worden ist. Die letztgenannte Berachtungsweise wird im folgenden zugrundegelegt. Durch eine Schraffur ist schematisch in Figur 1 derjenige Kontaktbereich X angedeutet, in dem der Anlageabschnitt 10 in Kontakt mit dem Ohr bzw. Kopf steht, wenn die Brille aufgesetzt ist und keine besonderen Kräfte auf die Brille wirken, sondern lediglich ihre Gewichtskraft. Aufgrund der Federeigenschaften des Anlageabschnitts 10, der Federbereiche 16 und 18 sowie des übrigen Verbindungsabschnitts 6 kann das Bügelendstück beim Aufsetzen der Brille im erforderlichen Maße derart nachgeben, daß der Anlageabschnitt 10 sich den nicht dargestellten Anlageflächen am Kopf bzw. Ohr anpaßt und ohne starke Druckspitzen anliegt. Aufgrund der Festhaltung des Anlageabschnitts 10 lediglich an seinem unteren Ende wird bei Einwirkung einer gegebenen Kraft auf den Anlageabschnitt 10 dessen oberes Ende am weitesten ausgelenkt, und zwar ungefähr entlang einem Kreisbogen um den zweiten Übergangsbereich 12. Wenn auch der auf den dem Bügelstück zugeordneten Bügel entfallende Anteil der Gewichtskraft vom Anlageabschnitt 10 eingeleitet werden soll, hat das vorstehend erläuternde Auslenkverhalten des Anlageabschnitts 10 den Vorteil, daß gerade der obere Abschnitt des Anlageabschnitts 10, der diesen Anteil des Gewichts überwiegend abstützen muß, die größte Nachgiebigkeit hat und sich somit unter Einwirkung dieses Anteils der Gewichtskraft leicht in eine Lage bewegen kann, bei der keine störend hohen Drücke im Kontaktbereich auftreten.

Wenn im nicht dargestellten Bügel im wesentlichen in dessen Längsrichtung verlaufende, nach rechts in Figur 1 gerichtete stärkere Kräfte auftreten, wie dies beispielsweise bei heftigeren Kopfbewegungen oder Stößen gegen die Brille der Fall sein kann, verformt sich das Bügelendstück stärker. Für einen solchen Fall ist in Figur 1 die Mittellinie 30 des verformten Bügelendstücks dargestellt, allerdings nur für den Verbindungsabschnitt 6, den zweiten Übergangsbereich 12 und den Anlageabschnitt 10, da sich der erste Abschnitt 2 und der erste Übergangsbereich 8 praktisch nicht verformen.

Eine nach rechts in Figur 1 gerichtete Zugkraft im nicht dargestellten Bügel führt zu einer vom Ohr bzw. Schädel ausgeübten Reaktionskraft auf das Bügelendstück von rechts in Figur 1, die im Kontaktbereich übertragen wird. Aufgrund dieser Beanspruchung wird der Verbindungsabschnitt 6 im durch den oberen Federbereich 18 gebildeten Gelenk etwas im Uhrzeigersinn in Figur 1 geschwenkt. Zugleich wird der Verbindungsabschnitt 6 wegen seiner Blattfedereigenschaft etwas gestreckt. Im am unteren Übergangsbereich 12 gebildeten Federgelenk erfolgt eine Schwenkung im Gegenuhrzeigersinn, und der Anlageabschnitt 10 wird aufgrund seiner Blattfedereigenschaft etwas gestreckt und im Gegenuhrzeigersinn um sein unteres Ende geschwenkt. Dadurch ergibt sich für die Mittellinie 30 der in Figur 1 dargestellte Verlauf. Der Anlageabschnitt 10 ist etwas steiler aufgerichtet, d.h. im Gegenuhrzeigersinn verschwenkt, und nach links in Figur 1 verlagert. Für diese ausgelenkte Stellung des Anlageabschnitts 10 ist wiederum der Kontaktbereich Y durch Schraffur schematisch angedeutet, wobei es sich versteht, daß der Anlageabschnitt 10 in ausgelenkter Stellung mit seiner Oberfläche und nicht mit seiner lediglich dargestellten Mittellinie anliegt. Aufgrund der beschriebenen Auslenkbewegung und Verlagerung des Anlageabschnitts 10 liegt der Kontaktbereich Y etwas tiefer als der Kontaktbereich X. Für beide Kontaktbereiche X und Y ist schematisch durch einen Pfeil die resultierende Reaktionskraft vom Ohm bzw. Schädel auf den Anlageabschnitt in Figur 1 eingezeichnet, und zwar als Reaktionskraft FO für die aufgesetzte Brille ohne besondere Belastung und als Reaktionskraft FA für den Fall starker Auslenkung des Anlageabschnitts 10. Aus der vorstehenden Erläuterung ergibt sich und aus Figur 1 ist erkennbar, daß sich die Richtungen der Reaktionskräfte FO und FA dadurch unterscheiden, daß die Reaktionskraft FA "flacher" verläuft als die Reaktionskraft FO, d.h. daß die Richtung der Reaktionskraft FA durch Drehung im Gegenuhrzeigersinn aus der Richtung der Reaktionskraft FO hervorgegangen ist. Der Anteil der senkrecht nach oben gerichteten Kraftkomponente an der Reaktionskraft FA ist dadurch kleiner als der Anteil der senkrecht nach oben gerichteten Kraftkomponente an der Reaktionskraft FO. Die Reaktionskraft FA, die das Bügelendstück und somit die gesamte Brille in ihre Ausgangslage zurückzubringen versucht, hat somit im wesentlichen die erwünschte starke horizontale Kraftkomponente, die die Brille nach hinten, d.h. nach links in Figur 1, zurückzuziehen versucht, und nur eine verhältnismäßig schwache oder gar keine nach oben gerichtete vertikale Kraftkomponente, die das Bügelendstück in unerwünschter Weise anheben würde.

Das vorstehend beschriebene Federungs- und Auslenkverhalten des Bügelendstücks ist im wesentlichen verursacht durch die geometrische Beziehung zwischen dem ersten Abschnitt 2, dem Verbindungsabschnitt 6 und dem Anlageabschnitt 10, d.h. dadurch, daß der Anlageabschnitt einen verhältnismäßig langen frei nach oben vorstehenden Endbereich aufweist. Dadurch ist grundsätzlich vorgegeben, in welcher Weise sich der Anlagebereich unter Belastung verlagert. Unterstützt und gesteuert wird diese Verlagerung durch geeignete Auswahl der Federungseigenschaften der drei Abschnitte des Bügelendstücks und gegebenenfalls die Vorsehung spezieller Federbereiche. Soweit das Federungs- und Auslenkverhalten des Anlageabschnitts vorstehend beschrieben ist, wird es durch den Eingriff des oberen Endes 14 des Anlageabschnitts in den ersten Abschnitt 2 nicht behindert oder beeinflußt, da in Form der Längsnut 78 freier Raum für die Bewegung des oberen Endes 14 innerhalb des Anlageabschnitts 2 geschaffen ist. Lediglich dann, wenn zusätzliche Querkräfte oder Querkraftkomponenten senkrecht zur Zeichenebene von Figur 1 auftreten, kommt es aufgrund der Berührung zwischen dem oberen Ende 14 und einer der Seitenwände 84 und 86 zu einem gewissen Reibungswiderstand, der jedoch, da es in Anbetracht des Kreisprofils des oberen Endes 14 allenfalls zu einer Linienberührung kommt, absolut klein ist und in Relation zu den übrigen am Bügelendstück wirkenden Kräfte so niedrig ist, daß das Federungs- und Auslenkverhalten auch bei Auftreten von Reibungswiderständen praktisch unverändert ist. Die Aussage, daß der Endbereich des Anlageabschnitts 10 des erfindungsgemäßen Bügelendstücks nach oben in Richtung zum ersten Abschnitt "frei" vorsteht — obwohl das obere Ende 14 und der erste Abschnitt 2 in Eingriff miteinander stehen — bedeutet somit, daß der Anlageabschnitt 10 ausschließlich im zweiten Übergangsbereich 12 festgehalten ist und bei seiner im wesentlichen nach hinten gerichteten, gewünschten Auslenkbewegung durch diese Festhaltung geführt und durch den Eingriff zwischen dem oberen Ende 14 und dem ersten Abschnitt 2 praktisch nicht behindert ist. Der Eingriff wiederum verhindert Bewegungen des oberen Endes 14 in von der einen, gewünschten Auslenkrichtung des Endabschnitts abweichenden Richtungen, — bei der beschriebenen ersten Ausführungsform beispielsweise senkrecht zur Zeichenebene von Figur 1 — und begrenzt darüber hinaus gegebenenfalls die Bewegung in der einen Auslenkrichtung, beispielsweise durch die Anschläge 80 und 82. Dieser Sachverhalt kann auch durch die Aussage beschrieben werden, daß der Anlageabschnitt im Bereich seiner Längsmitte oder seiner unteren Hälfte — gegebenenfalls gelenkig — festgehalten ist, an seinem oberen Ende dagegen in zumindest einer Richtung translatorisch bewegbar geführt ist, wobei die erforderlichen Haltekräfte am Ort der Festhaltung eingeleitet werden.

Der Eingriff zwischen dem oberen Ende 14 des Anlageabschnitts 10 und dem ersten Abschnitt 2 hat zur Folge, daß beim Aufsetzen der Brille der Anlageabschnitt 10 unmittelbar an seinem oberen Ende 14 vom ersten Abschnitt 2 geführt ist, so daß es durch Manipulation am zugehörigen Bügel der Brillenfassung möglich ist, den Anlageabschnitt 10 in gewünschter Weise am Kopf und/oder hinter dem Ohr zu positionieren. Jedenfalls ist diese Möglichkeit zur Manipulation eher gegeben, als wenn das obere Ende 14 nach allen Seiten frei bewegbar wäre. Beim Absetzen der Brille wiederum ist das obere Ende 14 durch den ersten Abschnitt 2 wie durch eine Haube oder Kappe geschützt, so daß das obere Ende 14 sich nicht in den Haaren oder der Haut verhaken und hängenbleiben kann. Schließlich ist durch den beschriebenen Eingriff zwischen dem oberen Ende 14 und dem ersten Abschnitt 2 dafür gesorgt, daß — bei Betrachtung von der Seite des Bügelendstücks, wie Figur 1 dies zeigt — kein Zwischenraum zwischen dem oberen Ende des Anlageabschnitts 10 und dem ersten Abschnitt 2 vorhanden ist, durch den Haare oder andere Gegenstände in den vom ersten Abschnitt 2, dem Verbindungsabschnitt 6 und dem Anlageabschnitt 10 umgrenzten Bereich ansonsten eindringen könnten.

Im folgenden wird das zweite Ausführungsbeispiel unter Bezugnahme auf Figur 3 erläutert, wobei für gleiche bzw. entsprechende Teile wie beim ersten Ausführungsbeispiel gleiche Bezugszeichen verwendet werden und im wesentlichen nur die Unterschiede zum ersten Ausführungsbeispiel erläutert werden.

Beim zweiten Ausführungsbeispiel gemäß Figur 3 haben der Anlageabschnitt 10 und der Verbindungsabschnitt 6 jeweils über ihre gesamte Länge ein nicht dargestelltes, im wesentlichen gleichbleibendes Kreisprofil, wobei der Anlageabschnitt 10 dünner ausgebildet ist als der Verbindungsabschnitt 6. Speziell ausgebildete Federbereiche wie die Federbereiche 16 und 18 des ersten Ausführungsbeispiels weist das Bügelendstück gemäß dem zweiten Ausführungsbeispiel nicht auf. An seinem oberen Ende geht der Verbindungsabschnitt 6 in den ersten Abschnitt 2 über, wobei sowohl der Übergangsbereich 8 als auch der sich daran anschließende Bereich des ersten Abschnitts 2 noch im wesentlichen das gleiche Querschnittsprofil haben wie der Verbindungsabschnitt 6. Der erste Abschnitt 2 weist einen verdickten Hauptbereich 88 auf, in dem eine in Längsrichtung des ersten Abschnitts verlaufende, gerade Bohrung 90 ausgebildet ist, die ein dem Verbindungsabschnitt 6 zugewandtes, hinteres offenes Bohrungsende 92 sowie ein zweites offenes Bohrungsende 94 aufweist. Die Bohrung 90 hat über ihre gesamte Länge mit Ausnahme des ersten Bohrungsendes 92 dieselbe Querschnittsfläche; das erste Bohrungsende 92 hat eine demgegenüber verringerte Querschnittsfläche. Durch das zweite Bohrungsende 94 ist in die Bohrung 90 ein Bügelschaftende 96 gesteckt, wodurch das Bügelendstück und der im übrigen nicht dargestellte Bügel miteinander verbunden sind.

Das obere Ende 14 des Anlageabschnitts 10 weist eine stabförmige, am übrigen Anlageabschnitt 10 einstückig angeformte Verlängerung 98 auf, die sich durch das erste Bohrungsende 92 hindurch in die Bohrung 90 erstreckt. Die Verlängerung 98 ist etwas gekrümmt, wobei der Krümmungsmittelpunkt im zweiten Übergangsbereich 12 zwischen dem Verbindungsabschnitt 6 und dem Anlageabschnitt 10 liegt. Trotz der verengten Ausbildung des ersten Bohrungsendes 92 besteht Spiel zwischen diesem Bohrungsende und der hindurchgeführten Verlängerung 98. Darüber hinaus sind die Bohrung 90 und die Verlängerung 98 derart dimensioniert, daß trotz der Krümmung der Verlängerung 98 diese in der Bohrung 90 bei der mit ausgezogenen Linien dargestellten Stellung keine Berührung mit der Bohrungswand hat.

Das erste Bohrungsende 92 umgebend ist am ersten Abschnitt 2 eine Schulter 100 ausgebildet, an der das obere Ende 14 des Anlageabschnitts 10 im nicht ausgelenkten Zustand desselben anliegt. Das Bügelendstück gemäß der zweiten Ausführungsform ist beispielsweise einstückig als Kunststoffteil gefertigt worden, wobei die ungespannte Stellung des Anlageabschnitts mit seinem Ende 14 in Figur 3 gestrichelt gezeigt ist. Aus dieser gestrichelt dargestellten Stellung wird der Anlageabschnitt 10 im Gegenuhrzeigersinn bis über seine mit ausgezogenen Linien gezeichnete Stellung hinaus so verschwenkt, daß das in Figur 3 rechte Ende der Verlängerung 98 durch das zweite Bohrungsende 92 in die Bohrung 90 eingeführt werden kann. Wenn danach der Anlageabschnitt 10 freigegeben wird, nimmt er die in Figur 3 mit ausgezogenen Linien dargestellte Stellung ein, in der er unter Vorspannung steht, da er in seine ungespannte Stellung wegen der Anlage an der Schulter 100 nicht zurückkehren kann.

Das Federungs- und Auslenkverhalten des Bügelendstücks gemäß der zweiten Ausführungsform stimmt grundsätzlich mit dem Federungs- und Auslenkverhalten der ersten Ausführungsform überein und wird daher nicht erneut erläutert. Bei der in Figur 3 nach links gerichteten Auslenkbewegung des Anlageabschnitts 10 bleibt der Eingriff zwischen der Verlängerung 98 und der Bohrung 90 erhalten, so daß der Anlageabschnitt zwar die gewünschte Auslenkbewegung ausführen kann, zugleich jedoch dadurch, daß das freie Ende 14 vom ersten Abschnitt 2 umschlossen ist, an größeren Bewegungen quer zur Achse der Verlängerung 98 gehindert ist. Diese Führungswirkung hat das verengte Bohrungsende 92 über den gesamten Umfang der Verlängerung 98. Unter normalen Belastungen steht die Verlängerung 98 allenfalls mit der Innenwand des verengten Bohrungsendes 92 in Berührung, während kein Kontakt mit der übrigen Bohrung 90 besteht. Dadurch ist der Reibungswiderstand gering, der eine Verschiebung der Verlängerung 98 in der Bohrung 90 entgegenwirkt. Besonderheit der Ausbildung gemäß Figur 3 im Vergleich zur Ausbildung gemäß Figur 1 ist, daß bei der Ausbildung gemäß Figur 3 der erste Abschnitt 2 eine etwas geringere Höhe haben kann (Abstand zwischen oberer und unterer Begrenzung des Hauptbereichs 88 in der Zeichenebene von Figur 3), daß der Bereich zwischen dem Hauptbereich 88 und dem ersten Übergangsbereich 8 schlank ausgebildet sein kann und daß die Bohrung 90 eine Doppelfunktion erfüllt, nämlich sowohl das Bügelschaftende 96 als auch die Verlängerung 98 aufzunehmen. Schließlich besteht eine Besonderheit der Ausführungsform gemäß Figur 3 darin, daß der Anlageabschnitt 10 bei stärkerer Auslenkung aus der in Figur 3 dargestellten Stellung auch eine gewisse Querbewegung, d.h. eine Bewegung senkrecht zur Zeichenebene von Figur 3, ausführen kann, wenn nämlich die abgeknickte Verlängerung 98 nicht über ihre ganze Länge in die Bohrung 90 eingeschoben ist sondern teilweise nach links daraus vorsteht.

Figur 4 zeigt ausschnittsweise eine Abwandlung der zweiten Ausführungsform gemäß Figur 3. Der Unterschied zwischen den beiden Ausführungsbeispielen gemäß den Figuren 3 und 4 besteht darin, daß bei der Abwandlung gemäß Figur 4 die Verlängerung 98 als fadenförmiges Element 102 ausgebildet ist, das mit seinem einen Ende am übrigen Anlageabschnitt befestigt ist und an seinem anderen Ende mit einer scheibenförmigen Verdickung 104 verbunden ist. Durch die Ausbildung der Verlängerung 98 als fadenförmiges Element 102 kann die Verlängerung 98 im Falle eines Kontaktes mit der Innenwand des ersten Bohrungsendes 92 leicht ausweichen, so daß der Auslenkbewegung des Anlageabschnitts 10 ein noch geringerer Reibungswiderstand als bei der stabförmigen Verlängerung 98 gemäß Figur 3 entgegenwirkt. Die scheibenförmige Verdickung 104 stellt eine Sicherung gegen vollständiges Herausziehen der Verlängerung 98 aus der Bohrung 90 dar. Zum anfänglichen Einführen der Verdickung 104 in die Bohrung 90 kann die Verdickung 104 etwas abgekippt werden, so daß sie durch das erste Bohrungsende 92 hindurchgeschoben werden kann.

Die Abwandlung gemäß Figur 4 gewährleistet ebenso wie die Ausführungsform gemäß Figur 3, daß die Umgrenzung des vom ersten Abschnitt 2, Verbindungsabschnitt 6 und Anlageabschnitt 10 umschlossenen Bereichs geschlossen bleibt, so daß insbesondere keine Haare in diesen Bereich hineingelangen können. Die Querbeweglichkeit des Anlageabschnitts 10 ist bei ausgelenktem Anlageabschnitt größer als bei dem Ausführungsbeispiel gemäß Figur 3. Durch Wahl der Dicke und Biegsamkeit des fadenförmigen Elementes 102 kann das Ausmaß der Querbewegbarkeit beeinflußt werden. Dabei ist zu beachten, deß auch bei der Abwandlung gemäß Figur 4 dann, wenn der Anlageabschnitt 10 an der Schulter 100 anliegt, was in der Regel beim Aufsetzen und Abnehmen der Brille der Fall ist, eine Querbewegung senkrecht zur Achse der Verlängerung weitgehend unterbunden ist.

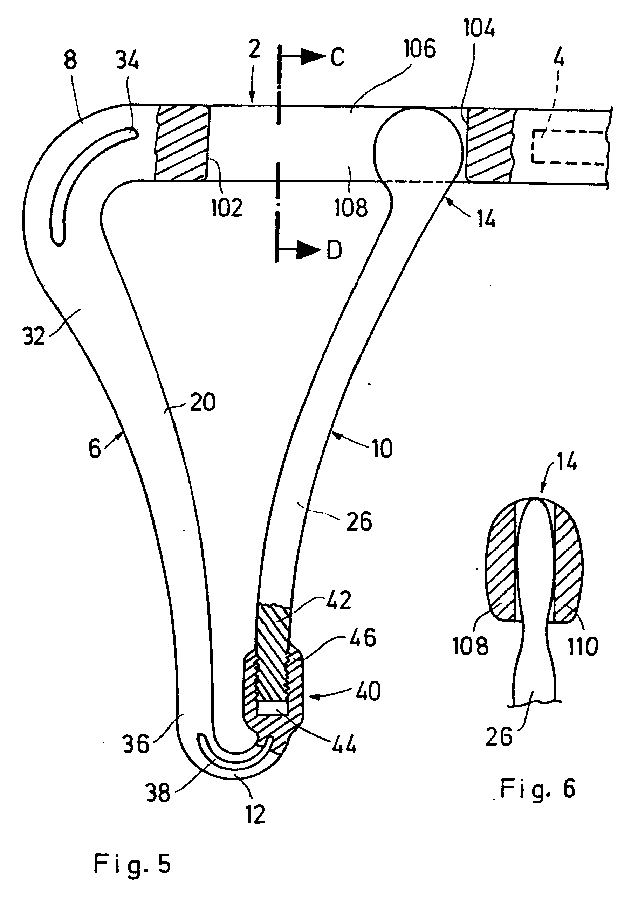

Im folgenden wird das dritte Ausführungsbeispiel unter Bezugnahme auf Figur 5 erläutert, wobei für gleiche bzw. entsprechende Teile wie beim ersten Ausführungsbeispiel gleiche Bezugszeichen verwendet werden und im wesentlichen nur die Unterschiede zum ersten Ausführungsbeispiel erläutert werden.

Beim dritten Ausführungsbeispiel gemäß den Figuren 5 und 6 ist der Verbindungsabschnitt 6 wiederum bogenförmig gekrümmt, wobei jedoch die Innenseite der Krümmung vom Ohr abgewandt ist. Ferner ändert sich die Querschnittsfläche des Verbindungsabschnitts 6 über seine gesamte Länge, wobei er sich von seinem oberen Ende ausgehend verjüngt. Dadurch ist der Verbindungsabschnitt 6 in seinem oberen Endbereich 32 und auch noch in seinem Mittelbereich verhältnismäßig steif. Die beim zweiten Ausführungsbeispiel vorgesehene Krümmung schafft mehr freien Raum für die Auslenkung des oberen Endes 14 des Anlageabschnitts 10, als er beim ersten Ausführungsbeispiel vorhanden ist.

Der erste Übergangsbereich 8 hat beim dritten Ausführungsbeispiel im wesentlichen das gleiche Profil wie der erste Abschnitt 2 und der Endbereich 32. Im Übergangsbereich 8 ist ein Schlitz 34 ausgebildet, der ungefähr der Krümmung des Übergangsbereichs 8 folgt und durch den der Übergangsbereich 8 geschwächt ist. Auf diese Weise ist der Übergangsbereich 8 als Federbereich ausgebildet, der ein Federgelenk zwischen dem steiferen ersten Abschnitt 2 und dem steiferen oberen Endbereich 32 des Verbindungsabschnitts 6 darstellt. Auf ähnliche Weise ist der zweite Übergangsbereich 12 ausgebildet, der ungefähr das Querschnittsprofil des unteren Endbereichs 36 des Verbindungsabschnitts 6 hat und mit einem Schlitz 38 versehen ist, der der Krümmung des zweiten Übergangsbereichs 12 folgt. Dieser Schlitz schwächt den zweiten Übergangsbereich 12 und macht ihn zum Federbereich, der federweicher als die angrenzenden Enden des Verbindungsabschnitts 6 und des Anlageabschnitts 10 ist und somit ein Federgelenk zwischen diesen beiden Abschnitten bildet. Die als Federbereiche ausgebildeten Übergangsbereiche 8 und 12 erfüllen somit bei der dritten Ausführungsform gemäß Figur 5 die Funktion der Federbereiche 16 und 18 der ersten Ausführrungsform, die dementsprechend bei der dritten Ausführungsform nicht vorgesehen sind.

Im Gegensatz zur einstückigen Ausbildung von Verbindungsabschnitt 6 und Anlageabschnitt 10 beim ersten und zweiten Ausführrungsbeispiel sind diese beiden Abschnitte beim zweiten Ausführungsbeispiel zunächst als getrennte Bauelemente gefertigt, die mittels einer Verbindungseinrichtung 40 miteinander verbunden sind. Diese Verbindungseinrichtung umfaßt einen Zapfen 42, der am unteren Ende des Anlageabschnitts 10 ausgebildet und auf seiner Außenseite mit einer Riffelung versehen ist, sowie eine Zapfenbohrung 44 in einer Hülse 46, die am zweiten Übergangsbereich 12 angeformt ist bzw. dessen eines Ende bildet. Die Hülse 46 weist im wesentlichen nach oben zum ersten Abschnitt 2. In die glatte Zapfenbohrung 44 ist der Zapfen 42 gesteckt, wobei sich durch Kaltfließen des vorgesehenen Kunststoffwerkstoffs eine feste Rastverbindung ergeben hat. Die zunächst getrennte Fertigung von Verbindungsabschnitt 6 und Anlageabschnitt 10 ermöglicht es, ein ansonsten gegebenes Bügelendstück mit wahlweise verschiedenen Anlageabschnitten 10 je nach den individuellen Bedürfnissen des Brillenträgers zu verbinden.

Es versteht sich, daß in Abwandlung vom in Figur 5 dargestellten Ausführungsbeispiel die Hülse 46 am Anlageabschnitt 10 angeformt und der Zapfen 42 am Übergangsbereich 12 vorgesehen sein kann und daß ferner die Verbindungseinrichtung 40 statt am in Figur 5 rechten Ende des Übergangsbereichs 12 an dessen linkem Ende angeordnet sein kann.

In dem im wesentlichen gerade verlaufenden Bereich des ersten Abschnitts 2 unmittelbar vor dem ersten Übergangsbereich 8 ist ein oben und unten offener Längsschlitz 106 ausgebildet, in den das obere Ende 14 des Anlageabschnitts 10 von unten hineinragt. Dieses obere Ende 14 ist als linsenförmige, abgeflachte Scheibe ausgebildet, deren größter Durchmesser in der Zeichenebene von Figur 5 liegt, wobei dieser Durchmesser größer als die Durchmesser des übrigen Endbereichs des Anlageabschnitts sind.

Der Längsschlitz 106 ist seitlich von zwei Seitenwänden 108 und 110 begrenzt, zu denen das linsenförmige Ende 14 einen gewissen Abstand hat und mit denen das Ende 14 aufgrund seiner Linsenform allenfalls in Punktberührung kommt, so daß der Reibungswiderstand dementsprechend niedrig ist. Am vorderen und am hinteren Ende ist der Längsschlitz 106 ähnlich wie die Längsnut des ersten Ausführungsbeispiels durch einen vorderen Anschlag 104 bzw. einen hinteren Anschlag 102 begrenzt, wobei das linsenförmige Ende 14 im nicht ausgelenkten Zustand unter Vorspannung am vorderen Anschlag 104 anliegt.

Das Auslenk- und Federungsverhalten des Anlageabschnitts 10 des Bügelendstücks gemäß der dritten Ausführungsform stimmt grundsätzlich mit dem Auslenk- und Federungsverhalten der ersten Ausführungsform überein. Der Eingriff zwischen dem oberen Ende 14 des Anlageabschnitts 10 und dem Längsschlitz 106 im ersten Abschnitt 2 hat gleichen Zweck und gleiche Wirkung wie beim ersten Ausführungsbeispiel. Hinsichtlich dieses Eingriffs unterscheidet sich die dritte Ausführungsform von der ersten im wesentlichen dadurch, daß die Gefahr der Behinderung der Auslenkbewegung durch im Längsschlitz 106 abgelagerte Verunreinigungen verringert ist, weil der Längsschlitz sowohl unten als auch oben offen ist, daß durch die Linsenform des Endes sowohl der Reibungswiderstand verrringert ist, als auch der Gefahr von Verkantungen des Endes 14 im Längsschlitz 106 vorgebeugt ist und daß der erste Abschnitt 2 eine geringere Höhe zu haben braucht als beim ersten Ausführungsbeispiel, um eine vergleichbar tiefe Ausnehmung in Form des Längsschlitzes 106 zu ermöglichen.

Es versteht sich, daß zahlreiche Abwandlungen der vorstehend beschriebenen Ausführungsbeispiele vorgenommen werden können. Insbesondere kann eine bestimmte, bei einem der Ausführungsbeispiele vorgesehene Ausbildung des Eingriffs zwischen dem oberen Ende 14 und dem ersten Abschnitt 2 auch bei den übrigen Ausführungsbeispielen statt der entsprechenden, bei den übrigen Ausführungsbeispielen vorgesehenen Ausbildung vorgesehen sein.

### Patentansprüche

1. Bügelendstück für einen Bügel einer Brillenfassung, mit einem im wesentlichen geraden, horizontal in Bügellängsrichtung verlaufenden, ersten Abschnitt (2), einem von einem Ende des ersten Abschnitts aus im wesentlichen nach unten verlaufenden Verbindungsabschnitt (6) und einem länglichen Anlageabschnitt (10), der zur Anlage zwischen Kopf und Ohr bestimmt ist und am Verbindungsabschnitt angebracht ist, dadurch gekennzeichnet, daß mindestens die Hälfte der Gesamtlänge (L) des Anlageabschnitts (10) in Richtung zum ersten Abschnitt (2) frei vorsteht und im wesentlichen nach hinten zum Verbindungsabschnitt auslenkbar ist und daß der Anlageabschnitt (10) mit dem Verbindungsabschnitt (6) an dessen unterem Ende verbunden ist, und daß das obere Ende (14) des Anlageabschnitts (10) mit dem ersten Abschnitt (2) derart in Eingriff steht, daß das obere Ende relativ zum ersten Abschnitt zumindest in der einen Auslenkrichtung des Anlageabschnitts frei bewegbar ist und zugleich das obere Ende vom ersten Abschnitt umschlossen ist.

2. Bügelendstück nach Anspruch 1, dadurch gekennzeichnet, daß im ersten Abschnitt (2) eine Längsnut (78) ausgebildet ist, in die das obere Ende (14) des Anlageabschnitts (10) hineinragt.

3. Bügelendstück nach Anspruch 2, dadurch gekennzeichnet, daß die Längsnut (78) nach unten offen ist.

4. Bügelendstück nach Anspruch 1, dadurch gekennzeichnet, daß im ersten Abschnitt (2) ein Längsschlitz (106) ausgebildet ist, in den das obere Ende (14) des Anlageabschnitts (10) hineinragt.

5. Bügelendstück nach Anspruch 4, dadurch gekennzeichnet, daß der Längsschlitz (106) nach oben und unten offen ist.

6. Bügelendstück nach Anspruch 3 oder 5, dadurch gekennzeichnet, daß das obere Ende (14) als abgeflachte Scheibe ausgebildet ist, deren größter Durchmesser im wesentlichen in einer senkrechten Ebene liegt.

7. Bügelendstück nach Anspruch 6, dadurch gekennzeichnet, daß der größte Durchmesser der Scheibe grösser als die Durchmesser des übrigen Anlageabschnitts (10) ist.

8. Bügelendstück nach Anspruch 6 oder 7, dadurch gekennzeichnet, daß die Scheibe linsenförmig ist.

9. Bügelendstück nach einem der Ansprüche 2 bis 5, dadurch gekennzeichnet, daß das obere Ende (14) halbkugelförmig abgerundet ist.

10. Bügelendstück nach einem der Ansprüche 2 bis 9, dadurch gekennzeichnet, daß die Längsnut (78) bzw. der Längsschlitz (106) an ihrem bzw. seinem vorderen Ende einen Anschlag (80, 104) für das obere Ende (14) des Anlageabschnitts (10) aufweist, der dessen Bewegung nach vorn begrenzt.

11. Bügelendstück nach Anspruch 1, dadurch gekennzeichnet, daß im ersten Abschnitt (2) eine im wesentlichen in Längsrichtung des ersten Abschnitts verlaufende Bohrung (90) mit zumindest einem offenen Bohrungsende (92) ausgebildet ist und daß das obere Ende (14) des Anlageabschnitts (10) eine Verlängerung (98) aufweist, die sich im wesentlichen in Längsrichtung der Bohrung erstreckt und in diese hineinragt.

12. Bügelendstück nach Anspruch 11, dadurch gekennzeichnet, daß das offene Bohrungsende (92) eine kleinere freie Querschnittsfläche als der übrige, die Verlängerung (98) aufnehmende Abschnitt der Bohrung (90) hat.

13. Bügelendstück nach Anspruch 11 oder 12, dadurch gekennzeichnet, daß die Verlängerung (98) einstückig am Anlageabschnitt (10) angeformt und stabförmig ausgebildet ist.

14. Bügelendstück nach Anspruch 13, dadurch gekennzeichnet, daß die Verlängerung (98) bogenförmig gekrümmt ist, wobei der Krümmungsmittelpunkt im Übergangsbereich (12) zwischen dem Verbindungsabschnitt (6) und dem Anlageabschnitt (10) liegt.

15. Bügelendstück nach Anspruch 12, dadurch gekennzeichnet, daß die Verlängerung (98) als fadenförmiges Element (102) ausgebildet ist, das mit seinem einen Ende am übrigen Anlageabschnitt (10) befestigt ist und an seinem anderen Ende eine Verdickung (104) aufweist.

16. Bügelendstück nach einem der Ansprüche 11 bis 15, dadurch gekennzeichnet, daß das offene Bohrungsende (92) dem Verbindungsabschnitt (6) zugewandt ist.

17. Bügelendstück nach Anspruch 16, dadurch gekennzeichnet, daß die Bohrung (90) in eine Einsecköffnung (4) für ein Bügelschaftende (96) übergeht und ein zweites offenes Bohrungsende (94) aufweist.

18. Bügelendstück nach einem der Ansprüche 10, 16 und 17, dadurch gekennzeichnet, daß der Anlageabschnitt (10) bei nicht ausgelenktem Ende (14) desselben unter Vorspannung in Richtung weg vom Verbindungsabschnitt (6) steht und entgegen der Vorspannkraft durch den Anschlag (80, 104) bzw. das offene Bohrungsende (92) gehalten ist.

19. Bügelendstück nach einem der Ansprüche 1 bis 18, dadurch gekennzeichnet, daß der Anlageabschnitt (10) ein nach Art einer Blattfeder federndes Element ist.

20. Bügelendstück nach einem der Ansprüche 1 bis 19, dadurch gekennzeichnet, daß der Verbindungsabschnitt (6) bogenförmig gekrümmt ausgebildet ist, wobei die Innenseite der Krümmung nach vorne zum Ohr gewandt ist.

21. Bügelendstück nach einem der Ansprüche 1 bis 20, dadurch gekennzeichnet, daß der erste Abschnitt (2) und der Verbindungsabschnitt (6) einstückig miteinander ausgebildet sind.

22. Bügelendstück nach einem der Ansprüche 1 bis 21, dadurch gekennzeichnet, daß der Verbindungsabschnitt (6) und der Anlageabschnitt (10) einstückig miteinander ausgebildet sind.

23. Bügelendstück nach einem der Ansprüche 1 bis 21, dadurch gekennzeichnet, daß der Verbindungsabschnitt (6) und der Anlageabschnitt (10) getrennt gefertigte Teile sind.

24. Bügelendstück nach Anspruch 23, dadurch gekennzeichnet, daß der Verbindungsabschnitt (6) und der Anlageabschnitt (10) mit Hilfe eines Zapfens (42) und einer Zapfenbohrung (44) verbunden sind, in die der Zapfen eingesetzt ist, wobei der Zapfen an einem der beiden Teile (Verbindungsabschnitt oder Anlageabschnitt) und die Zapfenbohrung am anderen der beiden Teile ausgebildet ist.

**Revendications**

1. Pièce d'extrémité de branche de monture de lunette, avec une première section (2) sensiblement droite, s'étendant horizontalement dans la longueur de la branche, avec une section de liaison (6) s'étendant depuis une extrémité de la première section, sensiblement vers le bas, et une section d'appui (10) allongée, qui est conçue pour l'appui entre tête et oreille et montée sur la section de liaison, caractérisée en ce qu'au moins la moitié de la longueur totale (L) de la section d'appui (10) fait saillie librement en direction de la première section (2) et est rabattable sensiblement vers l'arrière, par rapport à la section de liaison (10) et que la section d'appui (10) est reliée à la section de liaison (6) à son extrémité inférieure, et que l'extrémité supérieure (14) de la section d'appui (10) vient en contact avec la première section (2), de telle façon que l'extrémité supérieure est déplaçable librement par rapport à la première section, au moins dans le sens d'articulation de la section d'appui, et qu'en même temps l'extrémité supérieure est entourée par la première section.

2. Pièce d'extrémité de branche selon la revendication 1, caractérisée en ce que, dans la première section (2), est réalisée une rainure longitudinale (78) dans laquelle pénètre l'extrémité supérieure de la section d'appui (10).

3. Pièce d'extrémité de branche selon la revendication 2, caractérisée en ce que la rainure longitudinale (78) est ouverte vers le bas.

4. Pièce d'extrémité de branche selon la revendication 1, caractérisée en ce que, dans la première section (2), est réalisée une fente longitudinale (106), dans laquelle pénètre l'extrémité supérieure (14) de la section d'appui (10).

5. Pièce d'extrémité de branche selon la revendication 4, caractérisée en ce que la fente longitudinale (106) est ouverte vers le haut et vers le bas.

6. Pièce d'extrémité de branche selon la revendication 3 ou 5, caractérisée en ce que l'extrémité supérieure (14) est réalisée sous forme de limbe aplati, dont le plus grand diamètre est situé sensiblement dans un plan vertical.

7. Pièce d'extrémité de branche selon la revendication 6, caractérisée en ce que le plus grand diamètre du limbe est supérieur au diamètre du reste de la section d'appui (10).

8. Pièce d'extrémité de branche selon la revendication 6 ou 7, caractérisée en ce que le limbe est en forme de disque.

9. Pièce d'extrémité de branche selon l'une des revendications 2 à 5, caractérisée en ce que l'extrémité supérieure (14) est arrondie en forme de demi-sphère.

10. Pièce d'extrémité de branche selon l'une des revendications 2 à 9, caractérisée en ce que la rainure longitudinale (78), respectivement la fente longitudinale (106) présente sur son extrémité supérieure, pour l'extrémité supérieure (14) de la section d'appui (10), une butée (80, 104) qui limite le déplacement vers l'avant.

11. Pièce d'extrémité de branche selon la revendication 1, caractérisée en ce que, dans le première section (2) est réalisé un alésage (90) s'étendant sensiblement en direction longitudinale de la première section, avec au moins une extrémité d'alésage (92) ouverte et que l'extrémité supérieure (14) de la section d'appui (10) présente un prolongement (98) qui s'étend sensiblement en direction longitudinale de l'alésage et pénètre dans celui-ci.

12. Pièce d'extrémité de branche selon la revendication 11, caractérisée en ce que l'extrémité d'alésage ouverte (92) présente une surface de section transversale libre plus petite que le reste de la section de l'alésage (90) qui reçoit le prolongement (98).

13. Pièce d'extrémité de branche selon la revendication 11 ou 12, caractérisée en ce que le prolongement (98) est réalisé d'une seule pièce et en forme de tige sur la section d'appui (10).

14. Pièce d'extrémité de branche selon la revendication 13, caractérisée en ce que le prolongement (98) est courbé en forme d'arc, le centre de courbure se trouvant dans la zone de transition (12) située entre la section de liaison (6) et la section d'appui (10).

15. Pièce d'extrémité de branche selon la revendication 12, caractérisée en ce que le prolongement (98) est réalisé sous forme d'élément (102) en forme de fil, fixé à une de ses extrémité au reste de la section d'appui (10) et présentant à son autre extrémité un épaississement (104).

16. Pièce d'extrémité de branche selon l'une des revendications 11 à 15, caractérisée en ce que l'extrémité d'alésage ouverte (92) est tournée vers la section de liaison (6).

17. Pièce d'extrémité de branche selon la revendication 16, caractérisée en ce que l'alésage (90) se transforme en un orifice d'enfichage (4) pour une extrémité de tige de branche (96) et présente une deuxième extrémité d'alésage (94) ouverte.

18. Pièce d'extrémité de branche selon l'une des revendications 10, 16 et 17, caractérisée en ce que la section d'appui (10), lorsque son extrémité (14) n'est pas rabattue sous précontrainte, s'éloigne de la section de liaison (6) et est maintenue contre la force de précontrainte par la butée (80, 104), respectivement l'extrémité d'alésage (92) ouverte.

19. Pièce d'extrémité de branche selon l'une des revendications 1 à 18, caractérisée en ce que la section d'appui (10) est un élément élastique du type d'un ressort à lame.

20. Pièce d'extrémité de branche selon l'une des revendications 1 à 19, caractérisée en ce que la section de liaison (6) est courbée en forme d'arc, la face intérieure de la courbure étant tournée vers l'avant, par rapport à l'oreille.

21. Pièce d'extrémité de branche selon l'une des revendications 1 à 20, caractérisée en ce que la première section (2) et la section de liaison (6) sont réalisées formant ensemble une seule pièce.

22. Pièce d'extrémité de branche selon l'une des revendications 1 à 21, caractérisée en ce que la section de liaison (6) et la section d'appui sont réalisées formant ensemble une seule pièce.

23. Pièce d'extrémité de branche selon l'une des revendications 1 à 21, caractérisée en ce que la section de liaison (6) et la section d'appui (10) sont réalisées sous forme de pièces fabriquées séparément.

24. Pièce d'extrémité de branche selon la revendication 23, caractérisée en ce que la section de liaison (6) et la section d'appui (10) sont reliées à l'aide d'un tourillon (42) et d'un alésage de tourillon (44), dans lequel est inséré le tourillon, ce dernier étant réalisé sur l'une des deux parties (section de liaison ou section d'appui) et l'alésage de tourillon étant réalisé sur l'autre des deux parties.

**Claims**

1. End piece for a side member of a spectacles frame, having an essentially straight first section (2) extending horizontally in the longitudinal direction of the side member, a connecting section (6) extending essentially downwards from one end of the first section, and an elongate bearing section (10), which is intended to bear between head and ear and is attached to the connecting section, characterized in that at least half of the total length (L) of the bearing section (10) projects freely towards the first section (2) and can be deflected essentially rearwards towards the connecting section and in that the bearing section (10) is connected to the connecting section (6) at the lower end of the latter, and in that the upper end (14) of the bearing section (10) is in engagement with the first section (2) in such a way that the upper end is freely movable relative to the first section, at least in one direction of deflection of the bearing section, and the upper end is at the same time surrounded by the first section.

2. Side member end piece according to Claim 1, characterized in that a longitudinal groove (78), into which the upper end (14) of the bearing section (10) protrudes, is formed in the first section (2).

3. Side member end piece according to Claim 2, characterized in that the longitudinal groove (78) is open towards the bottom.

4. Side member end piece according to Claim 1, characterized in that a longitudinal slot (106), into which the upper end (14) of the bearing section (10) protrudes, is formed in the first section (2).

5. Side member end piece according to Claim 4, characterized in that the longitudinal slot (106) is open towards the top and towards the bottom.

6. Side member end piece according to Claim 3 or 5, characterized in that the upper end (14) is designed as a flattened disc, the largest diameter of which lies essentially in a vertical plane.

7. Side member end piece according to Claim 6, characterized in that the largest diameter of the disc is larger than the diameters of the remaining bearing section (10).

8. Side member end piece according to Claim 6 or 7, characterized in that the disc is lens-shaped.

9. Side member end piece according to one of Claims 2 to 5, characterized in that the upper end (14) is rounded in the form of a hemisphere.

10. Side member end piece according to one of Claims 2 to 9, characterized in that, at its forward end, the longitudinal groove (78) or the longitudinal slot (106) has a stop (80, 104) for the upper end (14) of the bearing section (10), which stop limits the forward movement of the latter.

11. Side member end piece according to Claim 1, characterized in that a bore (90) extending essentially in the longitudinal direction of the first section and having at least one open bore end (92) is formed in the first section (2) and in that the upper end (14) of the bearing section (10) has an extension (98) which extends essentially in the longitudinal direction of the bore and protrudes into the latter.

12. Side member end piece according to Claim 11, characterized in that the open bore end (92) has a smaller free cross-sectional area than the remaining section of the bore (90), which accommodates the extension (98).

13. Side member end piece according to Claim 11 or 12, characterized in that the extension (98) is integrally formed on the bearing section (10) and is in the form of a rod.

14. Side member end piece according to Claim 13, characterized in that the extension (98) is curved in the form of an arc, the centre of curvature lying in the transitional zone (12) between the connecting section (6) and the bearing section (10).

15. Side member end piece according to Claim 12, characterized in that the extension (98) is designed as a filiform element (102), which is attached at one of its ends to the remaining bearing section (10) and at its other end has a thickened portion (104).

16. Side member end piece according to one of Claims 11 to 15, characterized in that the open bore end (92) faces the connecting section (6).

17. Side member end piece according to Claim 16, characterized in that the bore (90) merges into a plug-in opening (4) for a side member shaft end (96) and has a second open bore end (94).

18. Side member end piece according to one of Claims 10, 16 and 17, characterized in that when the end (14) of the bearing section (10) is not deflected, the bearing section is under prestress away from the connecting section (6) and is held against the prestressing force by the stop (80, 104) or the open bore end (92).

19. Side member end piece according to one of Claims 1 to 18, characterized in that the bearing section (10) is an element which behaves resiliently in the manner of a leaf spring.

20. Side member end piece according to one of Claims 1 to 19, characterized in that the connecting section (6) is designed as curved in the form of an arc, the inside of the curve facing forwards towards the ear.

21. Side member end piece according to one of Claims 1 to 20, characterized in that the first section (2) and the connecting section (6) are formed integrally with one another.

22. Side member end piece according to one of Claims 1 to 21, characterized in that the connecting section (6) and the bearing section (10) are formed integrally with one another.

23. Side member end piece according to one of Claims 1 to 21, characterized in that the connecting section (6) and the bearing section (10) are separately produced parts.

24. Side member end piece according to Claim 23, characterized in that the connecting section (6) and the bearing section (10) are connected with the aid of a stud (42) and a stud bore (44) into which the stud is inserted, the stud being formed on one of the two parts (connecting section or bearing section) and the stud bore being formed on the other of the two parts.

Fig. 1

Fig. 2

Fig. 3

Fig. 4

EP 0 187 184 B1

Fig. 5

Fig. 6